(19)

Europäisches
Patentamt
European
Patent Office
Office européen
des brevets

(11) **EP 3 866 067 A1**

(12) **EUROPEAN PATENT APPLICATION**

(43) Date of publication:
**18.08.2021 Bulletin 2021/33**

(21) Application number: **20156965.4**

(22) Date of filing: **12.02.2020**

(51) Int Cl.:
*G06K 9/46* (2006.01)          *G06N 3/02* (2006.01)
*G06K 9/62* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Nguyen, Duc Tam**
**76133 Karlsruhe (DE)**
• **Tan, Andong**
**70435 Stuttgart-Zuffenhausen (DE)**

Remarks:
Amended claims in accordance with Rule 137(2) EPC.

(54) **DEVICE AND METHOD FOR CLASSIFYING IMAGES USING A RANDOM MASK ATTENTION LAYER**

(57)      A computer-implemented method for classifying images using an image classifier (107), wherein the image classifier (107) receives an input image (106) and outputs a classification (110), further wherein the classification depends on a second layer output of a second layer of the image classifier (107) comprising second layer output components, wherein computing the output of the second layer comprises the following steps:
• Receive a second layer input ($X$) from a first layer;
• Determine a first representation ($Q$) of the second layer input ($X$);
• Determine a second representation ($K$) of the second layer input ($X$);
• Determine a third representation ($V$) of the second layer input ($X$), wherein the third representation ($V$) comprises a plurality of third representation components;
• Determine a set of weights for each second layer output component based on the first representation ($Q$) and the second representation ($K$), wherein each set of weights comprises one weight for each third representation component;
• For each set of weights, randomly determine a subset of the corresponding set of weights, set the weights in the subset to a predefined or random value and normalize all other weights such that they sum to a second predefined value;
• Determine the second layer output ($O$) by multiplying each third representation component with its respective weight from the second layer output component's set of weights.

EP 3 866 067 A1

Fig. 3

## Description

Short summary in clear words

The invention concerns a method for classifying images, a method for operating an actuator, a computer program and a machine-readable storage medium, an image classifier, and a control system.

Prior art

"Attention Is All You Need", Vaswani et al., preprint published in https://arxiv.org/abs/1706.03762v5, 2019 discloses a self-attention layer for processing sequential data.

"Attention Augmented Convolutional Networks", Bello et al., preprint published in https://arxiv.org/abs/1904.09925v4, 2019 discloses how the self-attention layer from Vaswani *et al.* can be used for processing image data.

Advantages of the invention

Many real world devices feature image sensors, which are responsible for perceiving the environment around the device. The received images can be used in order to extract information around the environment and have the device act accordingly. Typically, this requires classifying the content of the perceived images using an image classifier. The image classifier predicts desired information based on the image. For example, an image classifier used in an at least partially autonomous vehicle may classify the surrounding road as wet or dry based on a perceived image. However, prior art classifiers are not perfect and may misclassify certain images. The general ability of an image classifier to classify images correctly is known as performance. It is obvious, that a high performance is of the utmost importance, especially if the classifications are used for controlling the device. A low performance of the image classifier may lead to unwanted and/or unsafe behavior of the device.

The advantage of the method with the features of independent claim 1 is that it enables an image classifier to achieve even higher performance and better extraction of relevant image parts for a given problem compared to prior art image classifiers using self-attention layers.

Disclosure of the invention

In a first aspect, the invention is concerned with a computer-implemented method for classifying images using an image classifier, wherein the image classifier receives an input image and outputs a classification, further wherein the classification depends on a second layer output of the second layer of the image classifier comprising second layer output components, wherein computing the output of the second layer comprises the following steps:

- Receive a second layer input from a first layer;
- Determine a first representation of the second layer input;
- Determine a second representation of the second layer input;
- Determine a third representation of the second layer input, wherein the third representation comprises a plurality of third representation components;
- Determine a set of weights for each second layer output component based on the first representation and the second representation, wherein each set of weights comprises one weight for each third representation component;
- For each set of weights, randomly determine a subset of the corresponding set of weights, set the weights in the subset to a predefined or random value and normalize all other weights such that they sum to a second predefined value;
- Determine the second layer output by multiplying each third representation component with its respective weight from the second layer output component's set of weights.

An image classifier may be understood as a device, which determines one or many class labels for an image or parts of an image. The classification result can in turn be used to, e.g., control a device. For example, an image classifier may be employed as part of a perception pipeline of an autonomous vehicle. Here, the image classifier can be used in order to detect whether the vehicle is currently located in an urban neighborhood, a rural area or a highway. This information may in turn be used in order to activate and/or deactivate certain driving functions and/or driving maneuvers and/or speed limitations.

In general, the image classifier may determine different kinds of class labels. For example, it can determine whether an object is present or not at a certain location of an image. This approach is known as object detection. Using the example of an autonomous vehicle, object detection can be used to detect other road participants, especially pedestrians, other vehicles and cyclists. The information about other road participants may in turn be used to, e.g., plan a safe trajectory through the environment.

Another task for which the image classifier can be used for is semantic segmentation. Here, each element of the image is assigned a class label from the image classifier. Using the example from above, the image classifier may be used to classify each pixel of a camera image as belonging either to be a drivable or a non-drivable space. This information can again be used in order to determine a safe trajectory.

In general, the image classifier can receive image data of various modalities, especially sensor image data as provided by video, radar, LIDAR and/or ultra-sonic sensors as well as images provided by thermal cameras. Image data may also comprise audio signals as provided by one or more microphones, e.g., as spectral images. Images can be provided by a sensor directly. Alternatively, images may also be provided by some form of one or more storage units, e.g., hard drives and/or flash drives and/or solid-state drives, which comprise previously recorded images.

Images may be obtained either through a sensor or by synthesizing an image using, e.g., a computer-based simulation model. For this, an image may, e.g., be rendered from a virtual scene of a specific environment.

The output from the image classifier can be considered a prediction about the image data based on the image classifier's model. This prediction may be incorrect if the model is insufficient for a given datum. In this sense, performance of the image classifier is understood as a measure for how often a classifier predicts a desired class label correctly. In general, high performance is of the utmost importance for an image classifier. If, for example, the image classifier is used for controlling a device, incorrect classifications may lead to unwanted and/or unsafe behavior of the device.

In the context of this invention, an image classifier is understood to comprise layers, which extract information and may provide this information to one or multiple other layers. The layers are organized in a predefined topology in which the order is determined by the flow of information. If a first layers provides input for a second layer, the second layer is considered to follow the first layer while the first layer precedes the second layer. An input layer is considered to have no preceding layer and to provide an image to one or multiple layers of the image classifier. A final layer of an image classifier is a first layer, which is not followed by any further layer. The final layer provides the output of the image classifier.

A typical example of an image classifier is a neural network but other types of image classifiers such as support vector machines, stacked support vector machines or random forests also follow the layered design.

The advantage of this design is that the different layers provide increasingly abstract representations of the data. Layers, which occur early in a classifier, typically extract low-level representations, which can encode information about the image such as edges while layers, which occur later in the classifier, can extract high-level representations encoding information about, e.g., objects or parts of objects.

An image classifier can contain parameters, which control the image classifier's output given the input. For example, a layer of an image classifier may obtain its output by a linear transformation of its input. In this case, the image classifier's parameters would comprise the parameters of the transformation.

In case of an image classifier containing parameters, the classification behavior can be trained by adapting the parameters. In this context training, is understood as optimizing the parameters of the image classifier in order to obtain a desired classification for a given image. This can happen in an, e.g., supervised manner, where the image classifier is provided with tuples of input images and desired output classifications. The parameters can then be adapted such that the desired classifications are obtained for the respective images.

The advantage of using the first and second intermediate representations in order to create sets of weights is that unimportant content of the second layer input can be masked out. This allows layers, which follow the second layer in the classifier, to focus only on relevant parts of the image, which in turn leads to an easier classification problem and thus a higher performance of the image classifier.

The advantage of using the third representation instead of the second layer input itself is that the second layer may not only forward information to a succeeding layer but can also transform the second layer input to higher-level representation thus enriching the input with additional information. It has been shown that image classifiers using this paradigm achieve an even better performance.

In the first aspect, it can be further envisioned that the first representation and/or the second representation and/or the third representation is a linear transformation of the first layer output.

The advantage of this approach is that linear transformations allow for fast training times as they can be computed highly efficiently. In turn, this gives a higher classification performance compared to slower approaches given a fixed time budget.

In the first aspect, it can be further envisioned that all sets of weights are obtained according to the formula $S = \dfrac{QK^T}{c}$, where $S$ is the matrix of all sets of weights and $c$ is a predefined value.

In this scenario, the rows of $S$ represent the sets of weights, where the $i$-th row of $S$ contains the weights for the $i$-th second layer output component.

The advantage of using an outer product for computing $S$ is that all weights are computed in an efficient representation. The advantage of the scaling constant $c$ is that the absolute size of values of $S$ can be damped. Especially when using gradient-based training techniques, this dampening has a positive effect, as the gradients are smoother and training converges faster. This leads to a decreased training time, which in turn leads to a higher classification performance as described above.

In the first aspect, it can be further envisioned that the set of weights is normalized by randomly setting values of $S$ to a predefined or random value and normalizing other weights of each row such that their sum equals a second predefined value.

The advantage of this approach is that randomly setting the weights to a certain value prevents the image classifier from overfitting during training as the image classifier is trained to become robust to unexpected values in the matrix $S$. This acts as regularization on the image classifier. It is known from the literature, that regularization improves classification performance even further.

In the first aspect, it can be further envisioned that normalization of the other weights is achieved by applying the softmax function.

The advantage of using the softmax function is that it typically produces very sparse outputs and thus steers the second layer to focus on very few relevant aspects. This is advantageous as the second layer output focuses on relevant aspects of the second layer input, which in turn leads to an even further improvement in classification performance.

In the first aspect, it can be further envisioned that normalization of the other weights is achieved by dividing each of the other weights by the sum of all other weights.

The advantage of using this normalization is that it can be computed faster compared to the softmax. Given equal training times, this improves classification performance, as the image classifier is able to process more images.

In the first aspect, it can be further envisioned that the second layer output (206) is obtained according to the formula $O = SV$.

In the first aspect, it can be further envisioned that randomly setting values of $S$ to a predefined or random value is applied during training of the image classifier.

The advantage of this approach is that randomly setting the weights to a certain value prevents the image classifier from overfitting during training as the image classifier is trained to become robust to unexpected values in the matrix $S$. This acts as regularization on the image classifier. It is known from the literature, that regularization improves classification performance even further.

In the first aspect, it can further be envisioned that the method comprises the following additional steps:

- Receiving a sensor signal comprising data from a sensor;
- Determining an image, which depends on the sensor signal;
- Feeding the input image into the image classifier;
- Obtaining a classification that characterizes the image.

Embodiments of the invention will be discussed with reference to the following figures in more detail. The figures show:

Figure 1     a control system comprising an image classifier controlling an actuator in its environment;

Figure 2     a preferred embodiment of an image classifier;

Figure 3     a random mask attention layer;

Figure 4     a multi-headed random mask attention layer;

Figure 5     a control system controlling an at least partially autonomous robot;

Figure 6     a control system controlling a manufacturing system;

Figure 7     a control system controlling an access control system;

Figure 8     a control system controlling an imaging system.

Description of the embodiments

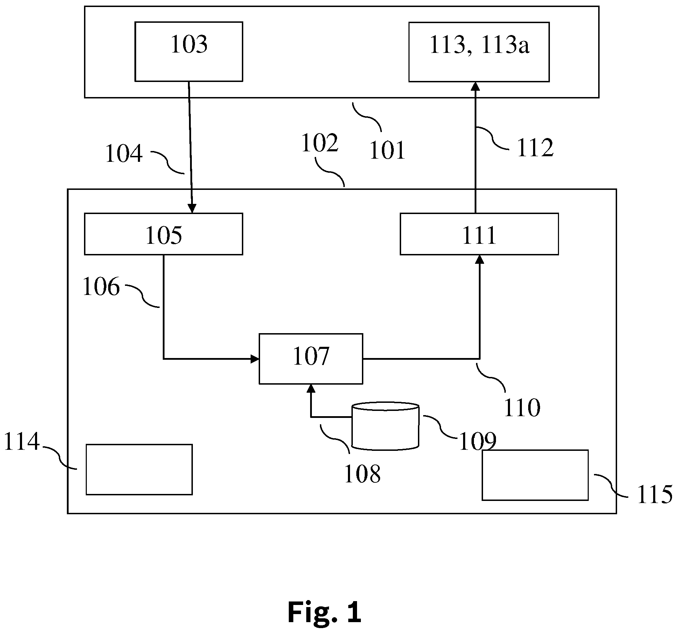

Figure 1 shows an embodiment of an actuator (113) located in its environment (101). The actuator (113) and its environment will be jointly called actuator system. At preferably evenly spaced points in time a sensor (103) senses a condition of the environment. The sensor (103) may comprise several sensors. The sensor (103) is an optical sensor that takes images of the environment. The sensor (103) transmits a sensor output signal (104) to a control system (102). Optionally, the sensor (103) may comprise multiple sensors. In this case, the sensor output signal (104) comprises multiple sensor output signals.

The control system (102) thus receives one or multiple sensor output signals (104) at each point in time. Based on these sensor output signals (104), it computes an actuator control command (112). Optionally, the actuator control command (112) may comprise multiple commands, e.g., for controlling multiple actuators and/or other devices (113a).

The actuator (113) receives an actuator control command (112), is controlled accordingly and carries out an action corresponding to the actuator control command (112). Optionally, the actuator (113) may comprise a control logic, which transforms the actuator control command (112) into a further control command, which is then used to control the actuator (113).

In order to compute the actuator control command, the control system (102) first receives the sensor output signal (104). An optional receiving unit (105) then transforms the sensor output signal (104) to an image (106). If no receiving unit (105) is used, the sensor output signal (104) may be used directly as image (106).

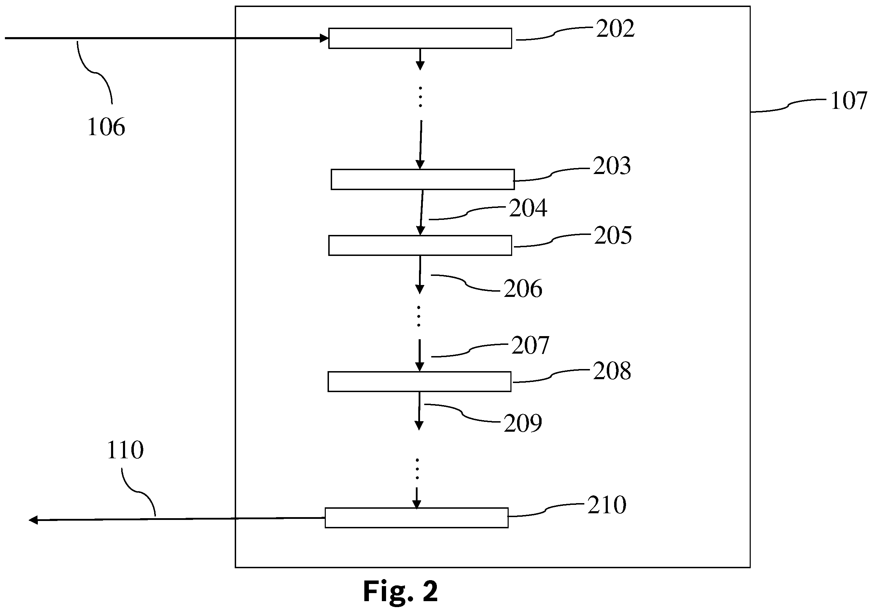

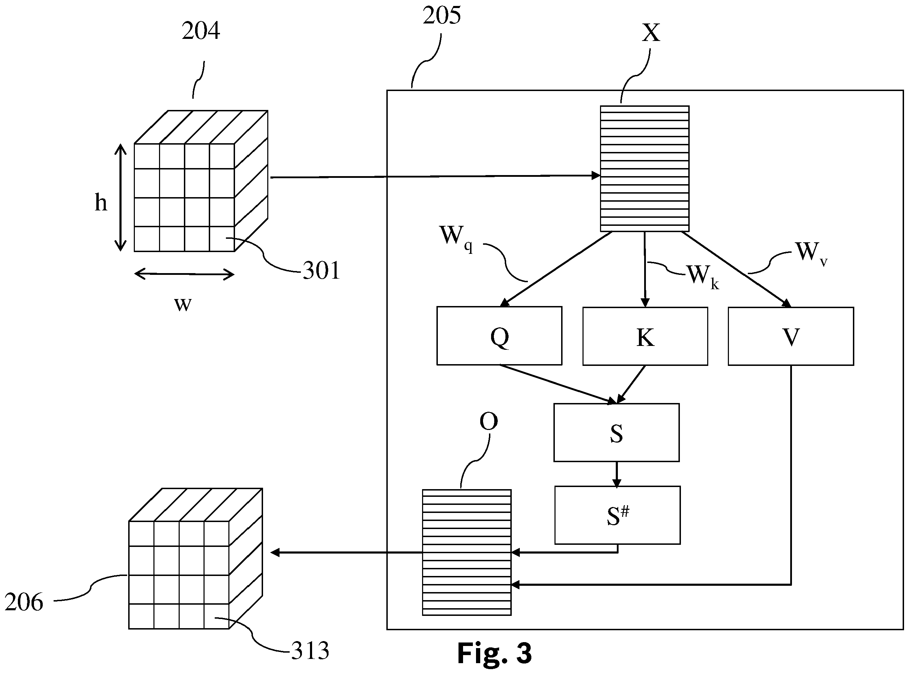

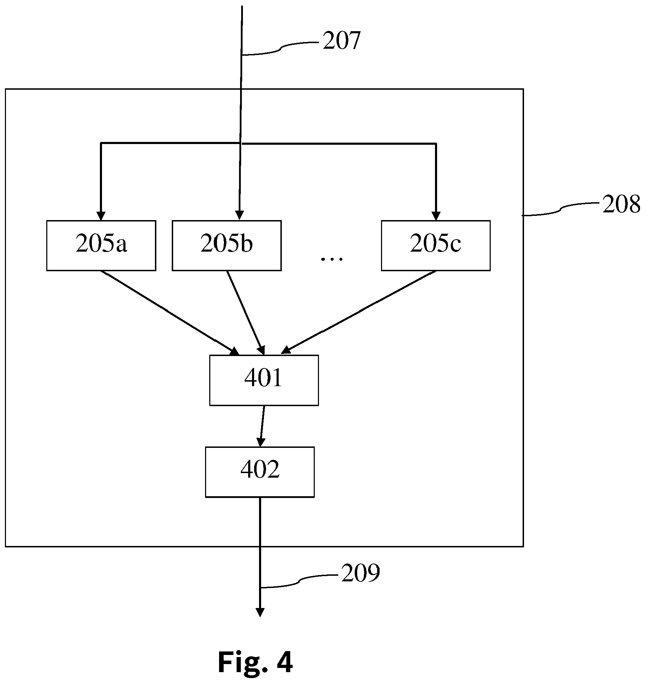

The image (106) is then forwarded to an image classifier (107) which comprises at least one random mask attention layer (205). The image classifier is visualized in Figure 2; the random mask attention layer is visualized in Figure 3. Alternatively or additionally, the image classifier may also comprise at least one multi-headed random mask attention layer (208). The multi-headed random mask attention layer is visualized in Figure 4. The image classifier provides a classification (110). The classification (110) comprises information that assigns one or more labels to the image (106). The classification is transmitted to an optional conversion unit (111), which converts the classification (110) into the actuator control command (112). The actuator control command (112) is then transmitted to the actuator (113) for controlling the actuator (113) accordingly. Alternatively, the classification (110) may directly be taken as actuator control command (112).

The image classifier (107) comprises parameters (108), which are stored in and provided by a parameter storage (109).

The image classifier (107) may comprise a random mask attention layer (205). The random mask attention layer receives a first layer output (204) from a first layer of the image classifier and provides a random mask attention layer output (206) to a following layer. Alternatively, the random mask attention layer may also provide the random mask attention layer output to a plurality of following layers. The first layer may be either an input layer (202) or an intermediate layer (203) in the image classifier (107). Alternatively, the random mask attention layer output may (209) be used as classification (110) of the image classifier directly.

The first layer output (204) may consist of a plurality of first layer output components, which are stored as pixels in a 3-dimensional tensor of a certain height ($h$) and width ($w$). In an optional step, the first layer output (204) may be transformed into a 2-dimensional matrix, which is used as random mask attention layer input ($X$) by stacking all pixels such that the pixels are indexed along the height of the 2-dimensional matrix. Alternatively, if the first layer output is already in the form of stacked pixels it can be used directly as random mask attention layer input ($X$). The random mask attention layer input consists of a plurality of random mask attention layer input components and there exist as many random mask attention layer input components as there are first layer output components.

In a next step, a first representation ($Q$) a second representation ($K$) and a third representation ($V$) can be obtained through three linear transformations of random mask attention layer input ($X$) with a first matrix ($W_q$), a second matrix ($W_k$) and a third matrix ($W_v$) such that:

$$Q = XW_q$$

$$K = XW_k$$

$$V = XW_v.$$

For this, the first matrix ($W_q$) and the second matrix ($W_k$) are chosen to be of the same width. Alternatively, the first representation ($Q$) and/ second representation ($K$) and/or third representation ($V$) may be obtained through a non-linear transformation, e.g., by applying a neural networks to the random mask attention layer input ($X$).

In a next step, a matrix $S$ is computed according to the formula $S = \dfrac{QK^T}{\sqrt{d}}$, where $d$ is the width of matrix $W_k$. Each row of $S$ represents a set of weights for each random mask attention layer input component with respect to a certain random mask attention layer output component (313). Then, a plurality of elements of $S$ is determined randomly and all these elements are set to a predefined value, e.g., 0. The softmax function can then be applied along the rows of $S$ for the remaining elements of $S$, such that the remaining elements of each row of $S$ sum to 1. Alternatively, the remaining weights may be normalized by dividing each remaining weight of a row by the sum of the remaining weights of the respective row. For both approaches, the result is a matrix $S^{\#}$. Then, the random mask attention layer output ($O$) is computed as follows: $O = S^{\#}V$, where each row of $O$ is a random mask attention layer output component (313). The random mask attention layer output components can then be rearranged to the height ($h$) and width ($w$) of the random mask attention layer input. Alternatively, the random mask attention layer output can be used directly without reshaping it. This can be used if, e.g., the layers following the random mask attention layer output ($O$) do not require the attention layer output components to be in the form of a tensor.

Alternatively or additionally, the image classifier (107) may comprise a multi-headed random mask attention layer (208). The multi-headed random mask attention layer (208) receives a new first layer input (207) and provides it to a plurality of random mask attention layers (205a, 205b, 205c). The plurality of random mask attention layer outputs are then concatenated (401). In an optional step, the concatenated random mask attention layer outputs (401) can be processed by a linear transformation in order to produce a multi-headed attention result (402) which is used as multi-headed random mask attention layer output (209). Alternatively, the concatenated random mask attention layer outputs (401) can be used directly as multi-headed random mask attention layer output (209). The multi-headed random mask attention layer output (209) can then be reshaped to the height and width of the new first layer input (207). Alternatively, the multi-headed random mask attention layer output may be provided to any following layer without reshaping it.

In further embodiments, it can be envisioned that the control system (102) may comprise the sensor (103). In even further embodiments, the control system (103) alternatively or additionally may comprise the actuator (113).

In still further embodiments, it may be envisioned that the control system (102) controls a display (113a) instead or in addition to the actuator (113).

Furthermore, the control system (102) may comprise a processor (114) (or a plurality of processors) and at least one machine-readable storage medium (115) on which instructions are stored which, if carried out, cause the control system (115) to carry out a method according to one aspect of the invention.

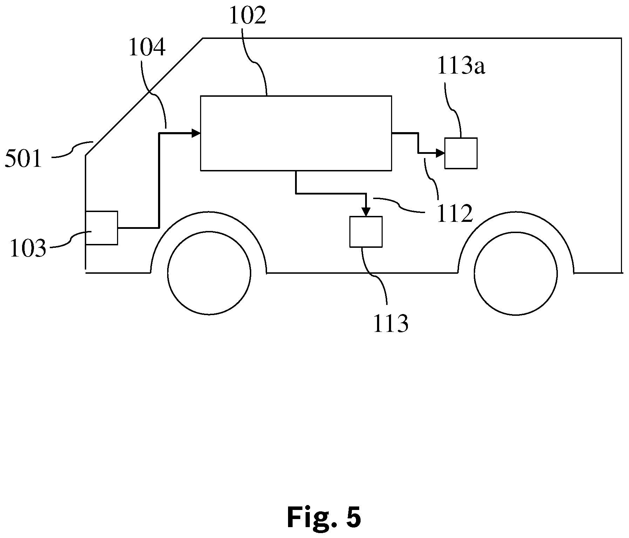

In a particular embodiment shown in Figure 5, the control system (102) is used to control at least parts of an at least partially autonomous robot, e.g., an at least partially autonomous vehicle (501).

The sensor (103) may comprise a video sensor and/or a radar sensor and/or an ultra-sonic sensor and/or a LiDAR sensor and/or a thermal camera. Some or all of these sensors are preferably but not necessarily integrated in the vehicle (501).

In the case of an at least partially autonomous robot, the control system (102) may control the robot such that it safely navigates its environment. For example, using the image (106), the classifier (107) may, for example, detect objects in the vicinity of the robot. The classification (110) may comprise information, which characterizes where objects are located in the vicinity of the robot. The actuator control command (112) may then be determined in accordance with this information, for example to avoid collisions with the detected objects.

The actuator (113), may comprise one or multiple actuators such as a brake and/or a propulsion system and/or an engine and/or a drivetrain and/or a steering of the vehicle (501). The actuator control command (112) may be determined such that the actuator (113) is controlled such that the vehicle (501) avoids collisions with the detected objects. Detected objects may also be classified according to what the image classifier (107) deems them most likely to be, e.g. pedestrians or trees, and the actuator control command (112) may be determined depending on the classification. For example, if a detected object is deemed to be a tree, the actuator control command (112) may be chosen to have the vehicle's trajectory pass the object closer compared to if it was deemed a pedestrian.

In further embodiments, the robot may be given by another mobile robot (not shown), which may, for example, move by flying, swimming, diving or stepping. Among others, this mobile robot may be an at least partially autonomous lawn mower, or an at least partially autonomous cleaning robot. In all of the above embodiments, the actuator control command (112) may be determined such that the propulsion unit or units and/or steering and/or brake of the mobile robot are controlled such that the mobile robot avoids collisions with the identified objects.

In a further embodiment, the robot may be given by a gardening robot (not shown), which uses the sensor (103) to determine a state of one or more plants in the environment (101). The actuator (113) may be a nozzle for spraying fluids such as water and/or liquid chemicals and/or may control a cutting device such as a blade and/or a pair of scissors. Depending on an identified plant species and/or an identified state of the plant or plants, the actuator control command (112) may be determined to cause the actuator (113) to spray the plants with a suitable quantity of suitable fluids or cut the plant using the cutting device.

In further embodiments, the robot may be given by a domestic appliance (not shown), for example a washing machine, a stove, an oven, a microwave, or a dishwasher. The sensor (103) may detect a state of an object, which is to undergo processing by the household appliance. For example, in the case of the domestic appliance being a washing machine, the sensor (103) may detect a state of the laundry inside the washing machine. The actuator control command (112) may then be determined depending on a detected material of the laundry.

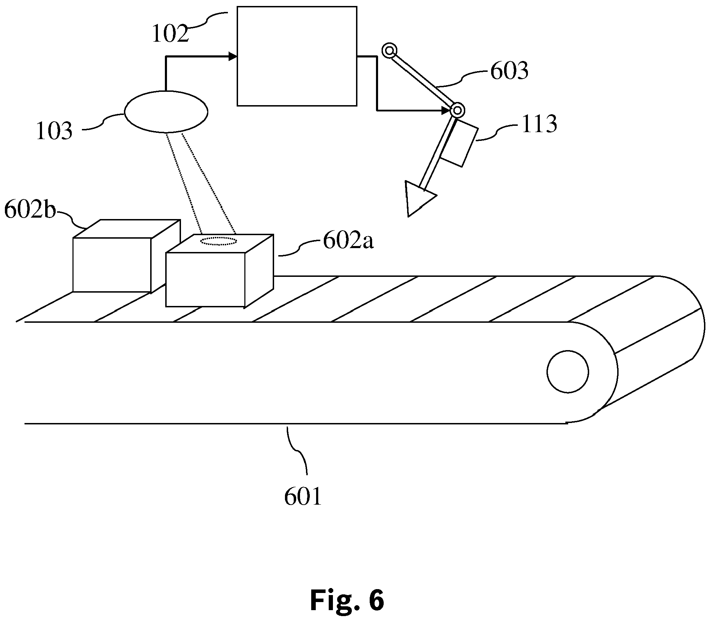

Figure 6 shows an embodiment in which the control system (102) is used to control a manufacturing machine (603), e.g. a punch cutter, a cutter or a gun drill of a manufacturing system (601), e.g. as part of a production line. The control system (102) controls an actuator (113) which in turn controls the manufacturing machine (603).

The sensor (103) may comprise one or more cameras, which capture properties of, e.g., a manufactured product (602a). The image classifier (107) may determine a state of the manufactured product (602a) from these captured properties. The actuator (113), which controls the manufacturing machine (603), may then be controlled depending on the determined state of the manufactured product (602a) for a subsequent manufacturing step of the manufactured product (602a). Alternatively, it can be envisioned that the actuator (113) is controlled during manufacturing of a subsequent manufactured product (602b) depending on the determined state of the manufactured product (602a).

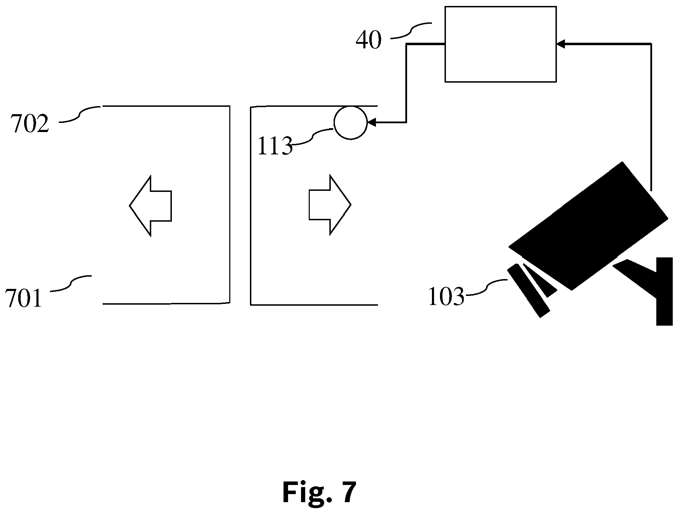

Figure 7 shows an embodiment in which the control system (102) controls an access control system (701). The access control system (701) may be designed to physically control access. For example, it may comprise a door (702) which in turn may comprise an actuator (113) which opens and closes the door. The sensor (103) can be configured to observe parts of the environment (101) in order for the control system (102) to decide whether access is to be granted or not. For example, the sensor may comprise a camera, which is used to record the area in front of the door (702). If a person enters, e.g., the area in front of the door, the image classifier (107) may detect the person's face, determine the person's identity and provide the identity as classification (110). The conversion unit (111) may then determine whether the person is eligible for entrance based on matching the identity with known identities stored in a database. If the person is eligible for entrance, the actuator control command (112) instructs the actuator (113) to open the door.

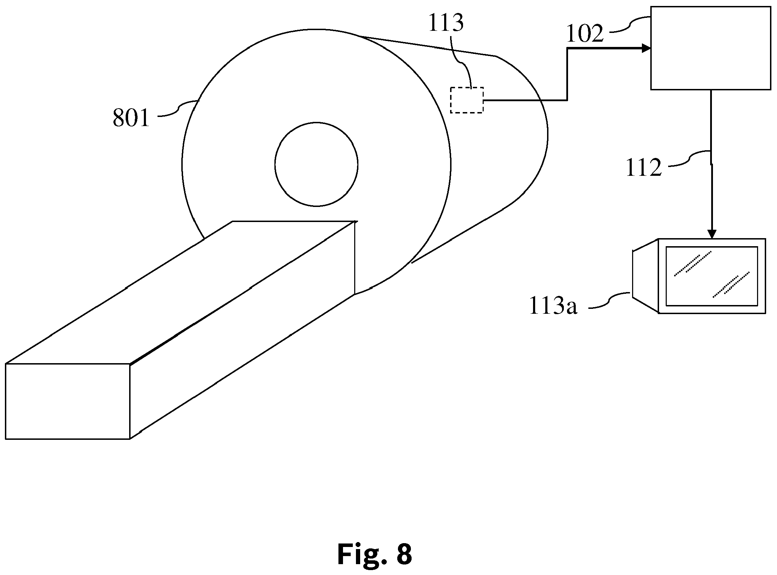

Figure 8 shows an embodiment of the control system (102) for controlling an imaging system (801), for example a magnetic resonance imaging apparatus, x-ray imaging apparatus, a positron emission tomography apparatus or an ultrasonic imaging apparatus. The sensor (113) may, for example, provide a magnetic resonance image, an x-ray image, an image of a positron emission tomography or an ultrasonic image depicting at least parts of a person. The image classifier (107) may then determine a classification of all or part of the sensed image. The actuator control signal (112) may then be chosen in accordance with this classification, thereby controlling a display (113a). For example, the image classifier (107) may detect regions of potentially malicious body tissue of the person. In this case, the actuator control command (112) may be determined to cause the display (113a) to display the sensed image and highlight the regions of the potentially malicious body tissue.

**Claims**

1. A computer-implemented method for classifying images using an image classifier (107), wherein the image classifier (107) receives an input image (106) and outputs a classification (110), further wherein the classification depends on a second layer output of a second layer of the image classifier (107) comprising second layer output components, wherein computing the output of the second layer comprises the following steps:

   • Receive a second layer input ($X$) from a first layer;
   • Determine a first representation ($Q$) of the second layer input ($X$);
   • Determine a second representation ($K$) of the second layer input ($X$);
   • Determine a third representation ($V$) of the second layer input ($X$), wherein the third representation ($V$) comprises a plurality of third representation components;
   • Determine a set of weights for each second layer output component based on the first representation ($Q$) and the second representation ($K$), wherein each set of weights comprises one weight for each third representation component;
   • For each set of weights, randomly determine a subset of the corresponding set of weights, set the weights in the subset to a predefined or random value and normalize all other weights such that they sum to a second predefined value;
   • Determine the second layer output ($O$) by multiplying each third representation component with its respective weight from the second layer output component's set of weights.

2. The method according to claim 1, wherein the first representation ($Q$) and/or the second representation ($K$) and/or the third representation ($V$) is a linear transformation of the second layer input ($X$).

3. Method according to claim 1 or 2, wherein all sets of weights are obtained according to the formula

$$S = \frac{QK^T}{c},$$ where $S$ is the matrix of all sets of weights and $c$ is a predefined value.

4. Method according to claim 3, wherein each set of weights is normalized by randomly setting values of $S$ to a predefined or random value and normalizing the other weights such that their sum equals a second predefined value.

5. Method according to claim 4, wherein normalization of the other weights is achieved by applying the softmax function.

6. Method according to claim 4, wherein normalization of the other weights is achieved by dividing each of the other weights by the sum of all other weights.

7. Method according to any of the claims 5 or 6, wherein the second layer output (206) is obtained according to the formula $O = SV$.

8. Method according to claim 7, wherein randomly setting values of $S$ to a predefined or random value is applied during training of the image classifier.

9. The method according to any one of the preceding claims further comprising the steps of:

   • Receiving a sensor signal (104) comprising data from a sensor (103);
   • Determining an input image (106), which depends on the sensor signal (104);
   • Feeding the input image (106) into the image classifier (107);
   • Obtaining a classification (110) that characterizes the input image (106).

10. A computer-implemented method for using an image classifier (107) according to claim 1, the method comprising all the steps of the method according to claim 9 and further comprising the step of:

   • Determining an actuator control signal (112) depending on the classification (110).

11. A computer program comprising instructions, which cause said computer program to carry out the method according to any of the preceding claims if said computer program runs on a computer.

12. A machine-readable storage medium on which the computer program according to claim 11 is stored.

13. A control system (102) for operating an actuator (113), wherein the control system (102) comprises an image classifier (107) according to any of the claims 1 to 10 and wherein the control system (102) is configured to operate the actuator (113) in accordance with the classification (110) of the image classifier (107).

Amended claims in accordance with Rule 137(2) EPC.

1. A computer-implemented method for classifying images using an image classifier (107), wherein the image classifier (107) receives an input image (106) and outputs a classification (110), further wherein the classification depends on a second layer output of a second layer of the image classifier (107) comprising second layer output components, wherein computing the output of the second layer comprises the following steps:

   • Receive a second layer input ($X$) from a first layer;
   • Determine a first representation ($Q$) of the second layer input ($X$), wherein the first representation ($Q$) is obtained through a linear transformation of the second layer input ($X$) or a non-linear transformation of the second layer input ($X$);
   • Determine a second representation ($K$) of the second layer input ($X$), wherein the second representation ($K$) is determined through a linear transformation of the second layer input ($X$) or a non-linear transformation of the second layer input ($X$);
   • Determine a third representation ($V$) of the second layer input ($X$), wherein the third representation ($V$) is determined through a linear transformation of the second layer input ($X$) or a non-linear transformation of the second layer input ($X$), further wherein the third representation ($V$) comprises a plurality of third representation components;
   • Determine a set of weights for each second layer output component based on the first representation ($Q$) and the second representation ($K$), wherein each set of weights comprises one weight for each third representation component;
   • For each set of weights, randomly determine a subset of the corresponding set of weights, set the weights in the subset to a predefined or random value and normalize all other weights such that they sum to a second predefined value;
   • Determine the second layer output ($O$) by multiplying each third representation component with its respective weight from the second layer output component's set of weights.

2. Method according to claim 1, wherein all sets of weights are obtained according to the formula

$$S = \frac{QK^T}{c},$$ where $S$ is the matrix of all sets of weights and c is a predefined value.

3. Method according to claim 2, wherein each set of weights is normalized by randomly setting values of $S$ to a predefined or random value and normalizing the other weights such that their sum equals a second predefined value.

4. Method according to claim 3, wherein normalization of the other weights is achieved by applying the softmax function.

5. Method according to claim 3, wherein normalization of the other weights is achieved by dividing each of the other weights by the sum of all other weights.

6. Method according to any of the claims 4 or 56, wherein the second layer output (206) is obtained according to the formula $O = SV$.

7. Method according to claim 6, wherein randomly setting values of $S$ to a predefined or random value is applied during training of the image classifier.

8. The method according to any one of the preceding claims further comprising the steps of:

   • Receiving a sensor signal (104) comprising data from a sensor (103);
   • Determining an input image (106), which depends on the sensor signal (104);
   • Feeding the input image (106) into the image classifier (107);
   • Obtaining a classification (110) that characterizes the input image (106).

9. A computer-implemented method for using an image classifier (107) according to claim 1, the method comprising all the steps of the method according to claim 8 and further comprising the step of:

   • Determining an actuator control signal (112) depending on the classification (110).

10. A computer program comprising instructions, which cause said computer program to carry out the method according to any of the preceding claims if said computer program runs on a computer.

11. A machine-readable storage medium on which the computer program according to claim 10 is stored.

12. A control system (102) for operating an actuator (113), wherein the control system (102) comprises an image classifier (107) according to any of the claims 1 to 9 and wherein the control system (102) is configured to operate the actuator (113) in accordance with the classification (110) of the image classifier (107).

**Fig. 1**

EP 3 866 067 A1

**Fig. 2**

**Fig. 3**

**Fig. 4**

**Fig. 5**

**Fig. 6**

EP 3 866 067 A1

Fig. 7

**Fig. 8**

Europäisches
Patentamt

European
Patent Office

Office européen
des brevets

# EUROPEAN SEARCH REPORT

Application Number

EP 20 15 6965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMONE FRINTROP ET AL: "Computational visual attention systems and their cognitive foundations", ACM TRANSACTIONS ON APPLIED PERCEPTION, ASSOCIATION FOR COMPUTING MACHINERY, INC, NEW YORK, NY, US, vol. 7, no. 1, 18 January 2010 (2010-01-18), pages 1-39, XP058250362, ISSN: 1544-3558, DOI: 10.1145/1658349.1658355 * Section 2.3.1; page 11 * * Section 3; page 13 - page 16; figure 7 * | 1-13 | INV. G06K9/46 G06N3/02 G06K9/62 |
| X | Adam Kosiorek: "Attention in Neural Networks and How to Use It", , 14 October 2017 (2017-10-14), XP055631910, Retrieved from the Internet: URL:http://akosiorek.github.io/ml/2017/10/14/visual-attention.html [retrieved on 2019-10-14] * the whole document * | 1 | TECHNICAL FIELDS SEARCHED (IPC) G06K G06N |
| A | KOCH ET AL: "Shifts in selective visual attention: towards the underlying neural circuitry", HUMAN NEUROBIOLOGY, SPRINGER VERLAG, vol. 4, no. 4, 1 January 1985 (1985-01-01), pages 219-227, XP008134119, ISSN: 0721-9075 * the whole document * | 1-8 | |

The present search report has been drawn up for all claims

| Place of search | Date of completion of the search | Examiner |
|---|---|---|
| The Hague | 12 August 2020 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 866 067 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **VASWANI et al.** *Attention Is All You Need,* 2019, https://arxiv.org/abs/1706.03762v5
- **BELLO et al.** *Attention Augmented Convolutional Networks,* 2019, https://arxiv.org/abs/1904.09925v4